# FASCICULE DE BREVET EUROPEEN

(11) **EP 3 129 179 B1**
(45) Date de publication et mention de la délivrance du brevet: **06.05.2026**
(21) Numéro de dépôt: 15720359.7
(22) Date de dépôt: 08.04.2015
(51) Int. Cl.: B23B 41/02, B23B 49/02, B23D 77/00, F16F 15/023, F16F 15/08, B23B 27/00, B23B 29/02

(54) **DISPOSITIF ANTI-VIBREUR POUR L'USINAGE D'UN ARBRE CREUX, TÊTE D'USINAGE DESTINÉE AU FORAGE D'UN ARBRE ET SYSTÈME D'USINAGE ANTI-VIBRANT**
SCHWINGUNGSDÄMPFUNGSVORRICHTUNG ZUR BEARBEITUNG EINER HOHLEN WELLE, BEARBEITUNGSKOPF ZUM BOHREN EINER WELLE, UND SCHWINGUNGSDÄMPFUNGSBEARBEITUNGSSYSTEM
VIBRATION DAMPING DEVICE FOR MACHINING A HOLLOW ARBOR, MACHINING HEAD FOR BORING AN ARBOR AND VIBRATION DAMPING MACHINING SYSTEM

(30) Priorité: 08.04.2014 FR 1453079
(43) Date de publication de la demande: 15.02.2017
(73) Titulaire: SAFRAN AIRCRAFT ENGINES, 75015 Paris (FR)
(72) Inventeur: DEJAUNE, Claude, F-77350 Boissise La Bertrand (FR); DOUADY, Cyril, F-91070 Bondoufle (FR)
(74) Mandataire: Cabinet Camus Lebkiri
(86) Numéro de dépôt international: PCT/FR2015/050906
(87) Numéro de publication internationale: WO 2015/155469

(56) Documents cités:
- EP-A1- 1 844 886
- CH-A- 446 855
- US-A- 2 283 497

## Description

### DOMAINE

Le domaine de l'invention concerne les dispositifs d'usinage et plus particulièrement d'alésage et de réalésage d'arbres notamment de turbine. Le domaine de l'invention se rapporte aux dispositifs permettant de limiter les vibrations induites par des opérations d'usinage comprenant l'alésage et le réalésage d'un arbre.

### ETAT DE L'ART

Aujourd'hui, il existe différentes techniques permettant d'aléser et réaléser des arbres. Ces opérations peuvent devenir très complexes à maitriser lorsque cette opération doit être menée sur une grande longueur d'arbre et que l'opération est réalisée « en aveugle », c'est-à-dire sans visibilité de l'opération menée.

En particulier, l'outil permettant de mener l'usinage doit assurer une rectitude de l'opération pour garantir un delta toile constant, c'est-à-dire pour garantir que la tolérance sur le diamètre intérieur des arbres est respectée sans présence d'ondulations afin respecter les critères en fonctionnement dynamique. En outre, il doit assurer un diamètre usiné dans un intervalle de tolérance limité. Par ailleurs, l'outil doit garantir un équilibre et une régularité de l'état de surface obtenu après l'usinage.

Généralement, pour des arbres de turbomachine d'un moteur d'aéronef, les ordres de grandeurs sont pour la longueur d'usinage de 2300mm, pour le delta toile de 0,01 mm et pour la tolérance sur la rectitude de 0,02 mm
Actuellement, cette opération de calibrage est réalisée sur une machine de forage avec une barre équipée d'une tête de calibrage à son extrémité.

Un problème constaté est que plus le diamètre de l'arbre à usiner est petit, plus des vibrations apparaissent lors de l'usinage. Les phénomènes de vibrations générées dans ce type d'usinage correspondent à un mouvement relatif entre la pièce usinée et l'outil coupant, ce qui se traduit par des ondulations plus ou moins marquée de la surface usinée.

Plus la barre qui porte l'outil coupant comporte un diamètre petit, plus les amplitudes des vibrations sont susceptibles d'augmenter.

Dans le cas d'un « réalésage profond » compte tenu du rapport diamètre/longueur à usiner, le phénomène de vibrations est très difficile à résoudre.

Différentes solutions existent dont notamment par exemple:
- la rigidification de la pièce par l'agencement de lunettes afin maintenir extérieurement l'arbre pendant l'usinage de forage en rotation ;
- le choix d'outils de coupe par une optimisation de l'angle de coupe, la nuance ou les revêtements ;
- une optimisation des paramètres de coupe, telles que : la vitesse de rotation, le nombre d'arrêtes de coupe, de l'avance par tour et le réglage du débit /pression du soluble réfrigérant.

Or ces solutions ne sont pas complètement satisfaisantes car elles ne suppriment totalement l'apparition des vibrations. En outre, elles sont parfois complexes et difficiles à mettre en œuvre.

Le document EP 1 844 886 A1 divulgue un dispositif anti-vibreur selon le préambule de la revendication 1, et le document CH 446 855 A divulgue une tête d'usinage selon le préambule de la revendication 9.

### RESUME DE L'INVENTION

L'invention permet de résoudre les inconvénients précités.

Un objet de l'invention concerne un dispositif anti-vibreur pour le calibrage ou l'usinage d'un arbre creux, caractérisé en ce qu'il comprend un premier élément destiné à être maintenu au moins partiellement à l'intérieur de l'arbre en position fixe par rapport à celui-ci et permettant le guidage d'une barre de guidage circulant axialement à l'intérieur de l'arbre, le premier élément comprenant :
▪ au moins un premier moyen d'amortissement mécanique disposé à la périphérie extérieure du premier élément en regard de la surface interne de l'arbre et faisant contact avec celui-ci ;
▪ au moins un deuxième moyen d'amortissement mécanique disposé intérieurement à la périphérie du premier élément en regard de la surface externe de la barre de guidage et faisant contact avec celle-ci.

Selon l'invention, le premier élément comprend, en outre, un moyen d'amortissement hydraulique par l'intermédiaire d'une lame de fluide lubrifiant s'écoulant à travers le premier élément.

Selon l'invention, le premier élément est une première bague maintenue fixe axialement par rapport à l'arbre au moyen d'un épaulement, ledit dispositif anti-vibreur comprenant :
▪ au moins une première rainure extérieure et au moins un premier joint extérieur adapté à coopérer dans ladite première rainure extérieure et formant le premier moyen d'amortissement;
▪ au moins une première rainure circonférentielle intérieure et au moins un premier joint intérieur adapté à coopérer dans ladite première rainure intérieure et formant le second moyen d'amortissement ;
▪ une cavité circonférentielle intérieure apte à faire circuler un fluide arrivant par un premier conduit et ressortant par un second conduit, les premier et second conduits traversant l'épaisseur radiale du dispositif anti-vibreur, la cavité circonférentielle intérieure formant le moyen hydraulique lorsque qu'une lame de fluide lubrifiant s'écoule à travers le premier élément.

Avantageusement, les première et seconde rainures circonférentielles intérieures sont situées respectivement sensiblement proche de chacune des extrémités de la première bague.

Avantageusement, la cavité circonférentielle intérieure s'étend longitudinalement entre :
▪ une première extrémité à proximité de la première rainure circonférentielle intérieure;
▪ une seconde extrémité à proximité de la seconde rainure circonférentielle intérieure.

Avantageusement, le premier conduit comprend une première ouverture coudée permettant le passage d'un fluide de l'extérieur du dispositif anti-vibreur vers la cavité circonférentielle intérieure, ladite première ouverture coudée comprenant une ouverture longitudinale le long de la surface extérieure de la première bague et un prolongement radial débouchant dans la cavité circonférentielle intérieure à proximité de la première extrémité de ladite cavité.

Avantageusement, le second conduit comprend une seconde ouverture coudée permettant le passage d'un fluide de la cavité circonférentielle intérieure vers l'extérieur du dispositif anti-vibreur, ladite seconde ouverture coudée comprenant une ouverture radiale à proximité de la seconde extrémité de ladite cavité et un prolongement longitudinal traversant l'épaulement de sorte à déboucher vers l'extérieur dudit dispositif anti-vibreur.

Avantageusement, le dispositif anti-vibreur comprend un second élément destiné à être maintenu au moins partiellement à l'extérieur d'une tête d'usinage en position fixe par rapport à celui-ci, le deuxième élément comprenant au moins un troisième moyen d'amortissement mécanique disposé à la périphérie extérieure du deuxième élément en regard de la surface interne de l'arbre et faisant contact avec celui-ci.

Avantageusement, le second élément comprend une rainure extérieure et un second joint extérieur adapté à coopérer dans ladite seconde rainure extérieure et formant le troisième moyen d'amortissement mécanique
Avantageusement, les corps du premier et/ou du second élément sont en polyamide.

Un autre objet de l'invention concerne une tête d'usinage destinée au forage d'un arbre comportant un ensemble de patins, ladite tête d'usinage étant guidée par une barre de guidage fixée à la tête d'usinage par un moyen de fixation, caractérisé en ce qu'une bague amovible est montée solidairement sur ladite tête d'usinage, ladite bague amovible comportant une rainure extérieure et un joint extérieur adapté à coopérer dans ladite seconde rainure extérieure pour former au moins un contact avec la surface intérieure de l'arbre permettant d'absorber une partie des vibrations mécaniques générées lors de l'usinage d'un arbre.

Avantageusement, le moyen de fixation est une bague de serrage.

Avantageusement, la bague amovible est maintenue fixe longitudinalement à la périphérie de ladite tête d'usinage entre un bord d'extrémité de ladite tête d'usinage et la bague de serrage.

Un autre objet de l'invention concerne un système d'usinage anti-vibrant, comprenant :
▪ Une tête d'usinage de l'invention comprenant une entrée permettant l'introduction d'un fluide de lubrification dans la partie d'un arbre à forer ;
▪ un dispositif anti-vibreur de l'invention adapté au passage de la barre de guidage lors de l'usinage d'un arbre.

### BREVES DESCRIPTION DES FIGURES

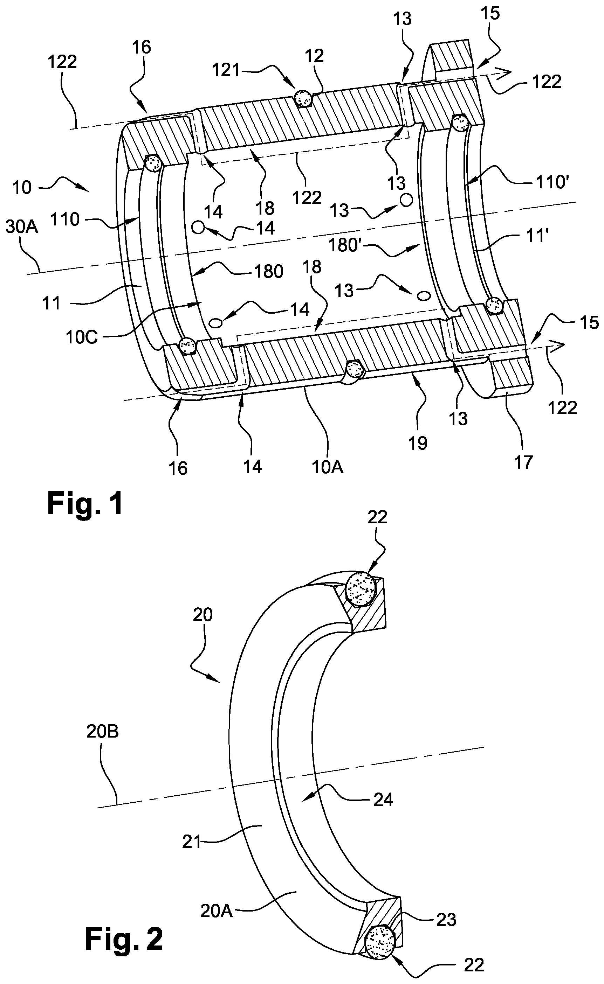

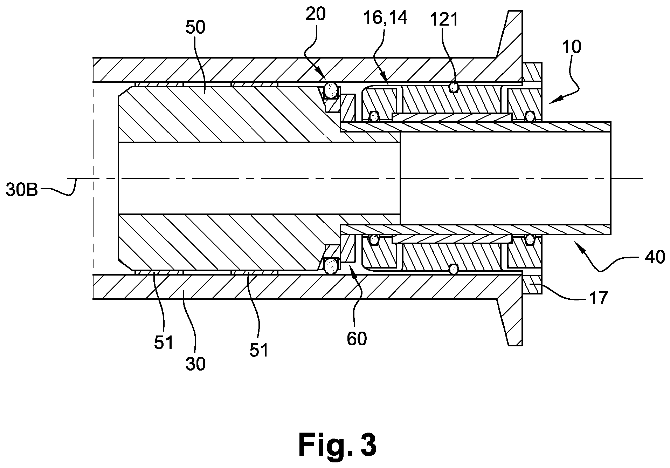

D'autres caractéristiques et avantages de l'invention ressortiront à la lecture de la description détaillée qui suit, en référence aux figures annexées, qui illustrent :
▪ figure 1 : une bague fixe de l'invention comprenant une cavité dans laquelle circule un fluide ;
▪ figures 2 : une bague amovible de l'invention destinée à être fixée à une tête d'usinage ;
▪ figures 3 : un système d'usinage anti-vibrant de l'invention inséré dans un arbre à forer.

### DESCRIPTION

La figure 1 représente un dispositif anti-vibreur de l'invention comprenant un premier élément formant une bague fixe 10 destinée à être fixée à un arbre creux 30 à forer s'étendant suivant un axe longitudinal 30A. L'arbre 30 est représenté sur la figure 3.

La bague fixe 10 comprend un corps 10A s'étendant selon un axe longitudinal 10B et pourvu d'une ouverture centrale 10C s'étendant suivant ledit axe et traversant de part en part le corps 10A. Ce dernier est prolongé d'un épaulement 17 à une de ses extrémités. L'épaulement 17 permet de définir une surface d'appui entre la bague fixe 10 et une extrémité de l'arbre à forer 30. L'épaulement 17 de la bague fixe 10 permet donc de maintenir fixe longitudinalement la bague fixe 10 vis-à-vis de l'arbre 30.

Le corps 10A de la bague fixe 10 comprend une première rainure extérieure 12 et au moins un premier joint extérieur 121 adapté à coopérer avec la première rainure extérieure 12 pour former un contact circonférentiel avec la surface intérieure de l'arbre 30 lorsque la bague fixe 10 est montée sur l'arbre 30.

La bague fixe 10 comprend également une première rainure circonférentielle intérieure 11 et au moins un premier joint intérieur 110 adapté à coopérer avec pour former un contact circonférentiel avec la surface extérieure d'une barre de guidage 40 d'un outil coupant telle qu'une tête d'usinage 50 représentée à la figure 3. Cette première rainure 11 est disposée à proximité d'un des bords de la bague fixe 10, c'est-à-dire à l'une de ses extrémités, de préférence à l'opposé de l'épaulement 17.

La bague fixe 10 comprend une seconde rainure circonférentielle intérieure 11' et au moins un premier joint intérieur 110' adapté à coopérer avec pour former un contact circonférentiel avec la surface extérieure d'une barre de guidage 40 d'un outil coupant telle qu'une tête d'usinage 50. Cette seconde rainure 11' est disposée à proximité de l'autre bord de la bague fixe 10, c'est-à-dire à l'extrémité opposée d'où est agencée la première rainure circonférentielle 11, de préférence à l'extrémité comportant l'épaulement 17.

Les joints 110 et 110' permettent de former un contact avec un arbre de guidage 40 et permettent de limiter les fuites ou le passage d'un fluide circulant dans la bague 10.

L'ouverture 10C de la bague fixe 10 comprend en outre une cavité circonférentielle intérieure 18 apte à faire circuler un fluide 122 arrivant par un premier conduit 14, 16 et ressortant par un second conduit 13, 15.

La cavité 18 usinée dans la bague 10 a la forme d'une baignoire circonférentielle. De ce fait, l'épaisseur de la bague sur la longueur de la baignoire est plus faible que l'épaisseur à ses extrémités. Ainsi un certain volume de fluide peut circuler dans la bague fixe 10 sur une épaisseur donnée.

Le fluide traversant la bague ne peut qu'emprunter la cavité 18 du fait de la présence :
▪ des joints intérieurs 110, 110' bloquant l'écoulement du fluide 122 par l'ouverture principale 10C de la bague fixe 10 et ;
▪ du joint extérieur 121 bloquant l'écoulement du fluide à la périphérie extérieure de la bague fixe 10 entre l'arbre 30 et la bague fixe 10.

De préférence, les joints intérieurs et extérieur sont en matériau adapté pour résister à l'eau, aux huiles et lubrifiants.

Le fluide 122 est avantageusement un fluide de lubrification qui peut être introduit lors de l'usinage notamment par l'outil coupant qui peut comprendre une ouverture permettant l'injection du lubrifiant.

La bague fixe 10 permet de réacheminer en retour le lubrifiant 122 vers l'extérieur de l'arbre 30 tout en utilisant son écoulement dans la cavité 18 de la bague fixe 10 comme un amortisseur de vibrations générées par l'opération d'usinage.

Pour acheminer le lubrifiant 122 à l'intérieur de la cavité 18, la bague fixe comprend des ouvertures 16, 14 sur son extrémité située à l'intérieur de l'arbre 30. Les ouvertures 16, 14 réalisent des conduits coudés 16, 14 ou encore des lumières coudées 16, 14.

La figure 1 représente en vue de coupe une rainure coudée 16, 14 dans laquelle un première rainure longitudinale débouchant d'une part vers l'extrémité de la bague fixe 10 et d'autre part vers une rainure radiale 14 débouchant dans la cavité 18.

Ainsi le lubrifiant précédemment injecté dans l'arbre à forer par une ouverture (non représentée) de l'outil coupant 50 peut ressortir en empruntant au moins un premier conduit 14, 16 débouchant dans la cavité creuse 18 de la bague fixe 10 formant une cavité circonférentielle 18.

La bague fixe 10 peut comprendre une pluralité d'ouvertures 16, 14 formant des ouvertures coudées. La figure 1 représente par exemple deux ouvertures radiales 14 dans le plan de coupe et deux ouvertures radiales dans la vue représentée. On en déduit que dans cet exemple six rainures radiales sont présentes et sont prolongées par autant de rainures longitudinales débouchant à l'intérieur de l'arbre.

La distribution des ouvertures 16, 14 peut être uniformément réparties à la périphérie de la bague fixe 10.

Ainsi le nombre d'ouvertures 14, 16 peut être dimensionnées en fonction d'un débit de fluide à faire circuler dans la cavité et donc à un taux d'amortissement pour faire diminuer les vibrations.

Selon un mode de réalisation, la bague fixe 10 comprend des secondes ouvertures de sorties 13, 15 disposées symétriquement par rapport aux premières ouvertures 16, 14 à l'autre extrémité de la bague fixe 10, c'est-à-dire du côté de l'extérieur de l'arbre. Leur géométrie peut être sensiblement proche des ouvertures 14, 16, c'est-à-dire en forme « coudée ». Des ouvertures radiales 13 formant des lumières agencées à la périphérie de la bague fixe 10 sont prolongées par des ouvertures longitudinales 15 débouchant à l'extérieur de la bague fixe 10 du côté extérieur de l'arbre 30. Selon un mode de réalisation, les ouvertures longitudinales 15 forment des lumières traversant l'épaulement 17 de la bague fixe 10.

Le fluide 122 emprunte le chemin formé par la ligne en pointillés représentée sur la figure 1. Le fluide 122 présent à l'intérieur de l'arbre 30 entre dans la bague fixe 10 du côté du joint 110 en empruntant les conduits coudés 16, 14, puis se répand dans la cavité circonférentielle 18 pour être ensuite éjecté par l'intermédiaire des conduits coudés 13, 15.

La cavité circonférentielle 18 permet de réaliser une fonction d'amortisseur de vibrations lorsqu'un fluide122, tel qu'un lubrifiant, la traverse. Le fluide traversant la cavité circonférentielle 18 permet de générer une lame de fluide qui lié à la viscosité engendre un coefficient d'amortissement supplémentaire par absorption d'énergie.

La figure 2 représente un second élément formant une bague amovible 20 destinée à être fixée à un outil coupant mobile tel qu'une tête d'usinage 50 représentée à la figure 3. La bague amovible 20 comprend un corps annulaire 20A d'axe 20B, et à la périphérie extérieure duquel est disposée une rainure circonférentielle 23 adaptée à recevoir un joint 22. Le joint 22 est destiné à créer une zone de contact entre la bague amovible 20 et la surface intérieure de l'arbre à forer/usiner 30 de sorte à amortir une partie des vibrations générées lors de l'usinage de l'arbre 30. La bague amovible 20 est agencée sur la partie arrière de la tête d'usinage 50, c'est-à-dire sur la partie de la tête 50 la plus proche de la sortie de l'arbre 30. La partie arrière de la bague amovible 20 est la partie la plus éloignée du fond de l'arbre 30 lorsque la tête d'usinage 50 est insérée en aveugle dans un arbre 30.

La bague amovible 20 est maintenue solidaire de la tête d'usinage 50. A cet effet, elle peut être maintenue par une bague de serrage 60.

Selon les modes de réalisation, la bague amovible 20 peut avoir différents profils, tel qu'un profil annulaire cylindrique ou un profil biseauté de sorte à comprendre une face en forme de couronne conique reposant sur une face circulaire et inclinée de la tête d'usinage 50.

La face inférieure périphérique 24 de la bague amovible 20 repose sur une face supérieure périphérique de la tête d'usinage 50.

La figure 3 représente un assemblage d'une tête d'usinage 50 comprenant des patins de guidage 51 qui est emmanchée dans un arbre 30 creux à forer grâce à une barre de guidage 40.

La barre de guidage 40 est rendue solidaire de la tête d'usinage 50 grâce à une bague de serrage 60. La bague de serrage 60 peut comprendre une double fonction :
▪ maintenir solidairement la tête d'usinage 50 avec la barre de guidage 40 ;
▪ maintenir solidairement la bague amovible 20 avec la tête d'usinage 50.

Avantageusement, la barre de guidage 40 et la tête d'usinage 50 comprennent des moyens permettant l'introduction d'un fluide 122 tel qu'un lubrifiant dans le fond de l'arbre 30 à usiner. Ce lubrifiant peut être évacué par la bague fixe 10 comme détaillé précédemment. Le débit du lubrifiant injecté peut être ajusté selon le débit de fluide circulant dans la cavité circonférentielle souhaité pour adapter une réponse fréquentielle aux vibrations générées.

La bague fixe 10 peut être montée sur la barre de guidage 40 et introduite dans l'arbre 30 en même temps que l'outil coupant 50 qui est lié à la barre de guidage 40.

La bague fixe 10 et la bague amovible 20 peuvent être réalisées en polyamide. En outre, un ensemble formé de ces deux bagues peut être agencé avant l'usinage d'un arbre de sorte à diminuer les vibrations générées lors de l'usinage d'un arbre d'une grande longueur. L'agencement des deux bagues peut simplement être réalisé en choisissant une bague fixe dont le diamètre intérieur est adapté au passage d'une barre de guidage 40 et dont le diamètre extérieur est adapté à coopérer avec le diamètre intérieure de l'arbre 30.

Identiquement, la bague amovible 20 peut être choisie de sorte à coopérer avec une tête d'usinage 50 donnée. Elle peut être spécialement conçue pour une tête d'usinage 50 donnée. Dans un autre mode de réalisation, la bague amovible 20 peut être associée avec des bagues de calibration permettant de créer une épaisseur supplémentaire entre la tête d'usinage 50 et la bague amovible 20. Cela permet, par exemple, de réaliser des bagues amovibles 20 de plus grand diamètre pour être compatible d'un plus grand nombre de têtes d'usinage 20 tout en étant compatible d'un fonctionnement correct.

Un avantage du dispositif anti-vibreur de l'invention et en particulier de la bague fixe 10 est qu'elle comporte en outre une fonction de guidage de la barre de guidage 40 dans l'arbre 30. Cette fonction de guidage permet d'atteindre une plus grande précision sur la rectitude de l'emmanchement de la barre de guidage 40 et donc de la tête d'usinage 50 avec l'arbre à forer 30.

La diminution des vibrations obtenue avec le dispositif de l'invention est la combinaison des effets d'amortissements conjoints entre d'une part ceux produits par les joints 110, 110', 121 et 22 et d'autre part ceux produits par le fluide circulant dans la cavité de la bague fixe 10. L'ensemble de ces deux effets d'amortissements mécanique et hydraulique permettent d'adapter la réponse fréquentielle des vibrations générées par une retenue mécanique et un coefficient de viscosité.

Par ailleurs, les deux effets d'amortissement permettent d'adapter la réponse fréquentielle aux vibrations générées :
▪ d'une part, entre la barre de guidage 40 et la bague fixe 10 et ;
▪ d'autre part, entre la bague fixe 10 et l'arbre 30 à forer et entre la bague amovible 20 et l'arbre 30 à forer.

La diminution des vibrations lors de l'alésage de l'arbre 30 permet d'obtenir un meilleur état de surface après l'alésage et, ce, sur une grande longueur de l'arbre 30. Notamment, le dispositif de l'invention est compatible avec tout type de longueur d'arbre à forer. Les résultats et les améliorations de l'état de surface se retrouvent nettement significatifs sur de grandes longueurs d'arbre, notamment supérieure à 1800 mm en allant jusqu'à des arbres de longueur de 2300 mm à 2500 mm. L'invention peut s'appliquer à tout type de diamètre d'alésage, notamment spécialement ceux compris entre 30mm et 60mm.

## Revendications

1. Dispositif anti-vibreur pour l'usinage d'un arbre creux (30), **caractérisé en ce qu'**il comprend un premier élément (10) destiné à être maintenu au moins partiellement à l'intérieur de l'arbre (30) en position fixe par rapport à celui-ci et permettant le guidage d'une barre de guidage (40) circulant axialement à l'intérieur de l'arbre (30), le premier élément comprenant :
▪ au moins un premier moyen d'amortissement mécanique (121) disposé à la périphérie extérieure du premier élément (30) en regard de la surface interne de l'arbre (30) et faisant contact avec celui-ci ;
▪ au moins un deuxième moyen d'amortissement mécanique (110, 110') disposé intérieurement à la périphérie du premier élément (10) en regard de la surface externe de la barre de guidage (40) et faisant contact avec celle-ci,
▪ où le premier élément (30) comprend, en outre, un moyen d'amortissement hydraulique (18) par l'intermédiaire d'une lame de fluide lubrifiant (122) s'écoulant à travers le premier élément (10)
ledit dispositif anti-vibreur comprenant :
▪ au moins une première rainure extérieure (12) et au moins un premier joint extérieur (121) adapté à coopérer dans ladite première rainure extérieure (12) et formant le premier moyen d'amortissement (121) ;
▪ au moins une première rainure circonférentielle intérieure (11) et au moins un premier joint intérieur (110) adapté à coopérer dans ladite première rainure intérieure (11) et formant le second moyen d'amortissement (110, 110') ;
**caractérisé en ce que** le premier élément est une première bague maintenue fixe axialement par rapport à l'arbre (30) au moyen d'un épaulement (17) et **en ce que** ledit dispositif anti-vibreur comprend :
▪ une cavité circonférentielle intérieure (18) apte à faire circuler un fluide (122) arrivant par un premier conduit (14, 16) et ressortant par un second conduit (13, 15), les premier (14, 16) et second conduits (13, 15) traversant l'épaisseur radiale du dispositif anti-vibreur (10), la cavité circonférentielle intérieure (18) formant le moyen hydraulique (18) lorsque qu'une lame de fluide lubrifiant s'écoule à travers le premier élément.

2. Dispositif anti-vibreur pour l'usinage d'un arbre (30) selon la revendication 1, caractérisé en que les première et seconde rainures circonférentielles intérieures sont situées respectivement sensiblement proche de chacune des extrémités de la première bague (10).

3. Dispositif anti-vibreur pour l'usinage d'un arbre (30) selon l'une quelconque des revendications 1 à 2, caractérisé en que la cavité circonférentielle intérieure (18) s'étend longitudinalement entre :
▪ une première extrémité (180) à proximité de la première rainure circonférentielle intérieure (11) ;
▪ une seconde extrémité (180') à proximité de la seconde rainure circonférentielle intérieure (11').

4. Dispositif anti-vibreur pour l'usinage d'un arbre (30) selon l'une quelconque des revendications 1 à 3, caractérisé en que le premier conduit (14, 16) comprend :
▪ une première ouverture coudée (16, 14) permettant le passage d'un fluide (122) de l'extérieur du dispositif anti-vibreur vers la cavité circonférentielle intérieure (18), ladite première ouverture coudée comprenant une ouverture longitudinale (16) le long de la surface extérieure de la première bague (10) et un prolongement radial (14) débouchant dans la cavité circonférentielle intérieure (18) à proximité de la première extrémité de ladite cavité (18).

5. Dispositif anti-vibreur pour l'usinage d'un arbre (30) selon l'une quelconque des revendications 1 à 4, caractérisé en que le second conduit (13, 15) comprend :
▪ une seconde ouverture coudée (13, 15) permettant le passage d'un fluide (122) de la cavité circonférentielle intérieure (18) vers l'extérieur du dispositif anti-vibreur (10), ladite seconde ouverture coudée (13, 15) comprenant une ouverture radiale (13) à proximité de la seconde extrémité de ladite cavité (18) et un prolongement longitudinal (15) traversant l'épaulement (17) de sorte à déboucher vers l'extérieur dudit dispositif anti-vibreur (10).

6. Dispositif anti-vibreur pour l'usinage d'un arbre (30) selon l'une quelconque des revendications 1 à 5, caractérisé en qu'il comprend un second élément (20) destiné à être maintenu au moins partiellement à l'extérieur d'une tête d'usinage (50) en position fixe par rapport à celui-ci, le deuxième élément comprenant :
▪ au moins un troisième moyen d'amortissement mécanique (22) disposé à la périphérie extérieure du deuxième élément (20) en regard de la surface interne de l'arbre et faisant contact avec celui-ci.

7. Dispositif anti-vibreur pour l'usinage d'un arbre (30) selon la revendication 6, caractérisé en que le second élément (20) comprend une rainure extérieure (23) et un second joint extérieur (22) adapté à coopérer dans ladite seconde rainure extérieure (23) et formant le troisième moyen d'amortissement mécanique

8. Dispositif anti-vibreur pour l'usinage d'un arbre (30) selon l'une quelconque des revendications 1 à 7, caractérisé en que les corps (10C, 20A) du premier et/ou du second élément (10, 20) sont en polyamide.

9. Tête d'usinage (50) destinée au forage d'un arbre (30) comportant un ensemble de patins (51), ladite tête d'usinage (50) étant guidée par une barre de guidage (40) fixée à la tête d'usinage (50) par un moyen de fixation (60), **caractérisé en ce qu'**une bague amovible (20) est montée solidairement sur ladite tête d'usinage (50), ladite bague amovible (20) comportant une rainure extérieure (23) et un joint extérieur (22) adapté à coopérer dans ladite seconde rainure extérieure (23) pour former au moins un contact avec la surface intérieure de l'arbre (30) permettant d'absorber une partie des vibrations mécaniques générées lors de l'usinage d'un arbre.

10. Tête d'usinage (50) selon la revendication 9, **caractérisée en ce que** le moyen de fixation (60) est une bague de serrage (60).

11. Tête d'usinage (50) selon la revendication 10, **caractérisée en ce que** la bague amovible (50) est maintenue fixe longitudinalement à la périphérie de ladite tête d'usinage (50) entre un bord d'extrémité de ladite tête d'usinage (50) et la bague de serrage (60).

12. Système d'usinage anti-vibrant, **caractérisé en ce qu'**il comprend :
▪ Une tête d'usinage (50) selon l'une quelconque des revendications 9 à 11, comprenant une entrée permettant l'introduction d'un fluide de lubrification dans la partie d'un arbre à forer ;
▪ un dispositif anti-vibreur selon l'une quelconque des revendications 1 à 8 adapté au passage de la barre de guidage (40) lors de l'usinage d'un arbre (30).

## Patentansprüche

1. Schwingungsdämpfende Vorrichtung für die Bearbeitung einer Hohlwelle (30), **dadurch gekennzeichnet, dass** sie ein erstes Element (10) umfasst, das dazu bestimmt ist, zumindest teilweise im Inneren der Welle (30) in einer festen Position relativ zu dieser gehalten zu werden und die Führung einer Führungsstange (40) zu ermöglichen, die axial im Inneren der Welle (30) verläuft, wobei das erste Element umfasst:
▪ mindestens ein erstes mechanisches Dämpfungsmittel (121), das am Außenumfang des ersten Elements (10) gegenüber der Innenfläche der Welle (30) angeordnet ist und mit dieser in Kontakt steht;
▪ mindestens ein zweites mechanisches Dämpfungsmittel (110, 110'), das am Innenumfang des ersten Elements (10) gegenüber der Außenfläche der Führungsstange (40) angeordnet ist und mit dieser in Kontakt steht,
▪ wobei das erste Element (10) außerdem ein hydraulisches Dämpfungsmittel (18) in Form einer Schmierflüssigkeitsschicht (122) umfasst, die durch das erste Element (10) fließt
wobei die schwingungsdämpfende Vorrichtung umfasst:
▪ mindestens eine erste Außennut (12) und mindestens eine erste Außendichtung (121), die in die erste Außennut (12) eingreift und das erste Dämpfungsmittel (121) bildet;
▪ mindestens eine erste innere Umfangsnut (11) und mindestens eine erste Innendichtung (110), die in die erste Innennut (11) eingreift und das zweite Dämpfungsmittel (110, 110') bildet;
**dadurch gekennzeichnet, dass** das erste Element ein erster Ring ist, der mittels einer Schulter (17) axial in Bezug auf die Welle (30) festgehalten wird, und dass die schwingungsdämpfende Vorrichtung umfasst:
▪ einen inneren Umfangshohlraum (18), der dazu geeignet ist, ein Fluid (122) zirkulieren zu lassen, das durch eine erste Leitung (14, 16) eintritt und durch eine zweite Leitung (13,15) austritt, wobei die erste (14, 16) und die zweite Leitung (13,15) die radiale Dicke der schwingungsdämpfenden Vorrichtung durchqueren und der innere Umfangshohlraum (18) das hydraulische Mittel (18) bildet, wenn eine Schmierflüssigkeitsschicht durch das erste Element fließt.

2. Schwingungsdämpfende Vorrichtung zum Bearbeiten einer Welle (30) gemäß Anspruch 1, **dadurch gekennzeichnet, dass** die erste und die zweite innere Umfangsnut jeweils im Wesentlichen nahe jedem der Enden des ersten Rings (10) angeordnet sind.

3. Schwingungsdämpfende Vorrichtung zum Bearbeiten einer Welle (30) gemäß einem der Ansprüche 1 bis 2, **dadurch gekennzeichnet, dass** sich der innere Umfangshohlraum (18) in Längsrichtung erstreckt zwischen:
▪ einem ersten Ende (180) in der Nähe der ersten inneren Umfangsnut (11);
▪ einem zweiten Ende (180') in der Nähe der zweiten inneren Umfangsnut (11').

4. Schwingungsdämpfende Vorrichtung zum Bearbeiten einer Welle (30) gemäß einem der Ansprüche 1 bis 3, **dadurch gekennzeichnet, dass** die erste Leitung (14, 16) umfasst:
▪ eine erste abgewinkelte Öffnung (16, 14), die den Durchfluss eines Fluids (122) von außerhalb der schwingungsdämpfenden Vorrichtung in den inneren Umfangshohlraum (18) ermöglicht, wobei die erste abgewinkelte Öffnung eine Längsöffnung (16) entlang der Außenfläche des ersten Rings (10) und eine radiale Verlängerung (14) umfasst, die in den inneren Umfangshohlraum (18) in der Nähe des ersten Endes des Hohlraums (18) mündet.

5. Schwingungsdämpfende Vorrichtung zum Bearbeiten einer Welle (30) gemäß einem der Ansprüche 1 bis 4, **dadurch gekennzeichnet, dass** die zweite Leitung (13, 15) umfasst:
▪ eine zweite abgewinkelte Öffnung (13, 15), die den Durchfluss eines Fluids (122) aus dem inneren Umfangshohlraum (18) nach außerhalb der schwingungsdämpfenden Vorrichtung ermöglicht, wobei die zweite abgewinkelte Öffnung (13, 15) eine radiale Öffnung (13) in der Nähe des zweiten Endes des Hohlraums (18) und eine Verlängerung (15) in Längsrichtung umfasst, die durch die Schulter (17) verläuft, sodass sie zur Außenseite der schwingungsdämpfenden Vorrichtung (10) mündet.

6. Schwingungsdämpfende Vorrichtung zum Bearbeiten einer Welle (30) gemäß einem der Ansprüche 1 bis 5, **dadurch gekennzeichnet, dass** sie ein zweites Element (20) umfasst, das dazu bestimmt ist, zumindest teilweise außerhalb eines Bearbeitungskopfes (50) in einer festen Position relativ zu diesem gehalten zu werden, wobei das zweite Element umfasst:
▪ mindestens ein drittes mechanisches Dämpfungsmittel (22), das am Außenumfang des zweiten Elements (20) gegenüber der Innenfläche der Welle angeordnet ist und mit dieser in Kontakt steht.

7. Schwingungsdämpfende Vorrichtung zum Bearbeiten einer Welle (30) gemäß Anspruch 6, **dadurch gekennzeichnet, dass** das zweite Element (20) eine Außennut (23) und eine zweite Außendichtung (22) umfasst, die in die zweite Außennut (23) eingreift und das dritte mechanische Dämpfungsmittel bildet.

8. Schwingungsdämpfende Vorrichtung zum Bearbeiten einer Welle (30) gemäß einem der Ansprüche 1 bis 7, **dadurch gekennzeichnet, dass** die Körper (10C, 20A) des ersten und/oder zweiten Elements (10, 20) aus Polyamid bestehen.

9. Bearbeitungskopf (50) zum Bohren einer Welle (30) mit einer Reihe von Gleitstücken (51), wobei der Bearbeitungskopf (50) von einer Führungsstange (40) geführt wird, die mit einem Befestigungsmittel (60) am Bearbeitungskopf (50) befestigt ist, **dadurch gekennzeichnet, dass** ein abnehmbarer Ring (20) fest mit dem Bearbeitungskopf (50) verbunden ist, wobei der abnehmbare Ring (20) eine Außennut (23) und eine Außendichtung (22) aufweist, die so ausgelegt ist, dass sie in die zweite Außennut (23) eingreift, um mindestens einen Kontakt mit der Innenfläche der Welle (30) herzustellen, wodurch ein Teil der bei der Bearbeitung einer Welle entstehenden mechanischen Schwingungen absorbiert werden kann.

10. Bearbeitungskopf (50) gemäß Anspruch 9, **dadurch gekennzeichnet, dass** das Befestigungsmittel (60) ein Spannring (60) ist.

11. Bearbeitungskopf (50) gemäß Anspruch 10, **dadurch gekennzeichnet, dass** der abnehmbare Ring (50) in Längsrichtung am Umfang des Bearbeitungskopfes (50) zwischen einer Endkante des Bearbeitungskopfes (50) und dem Spannring (60) festgehalten wird.

12. Schwingungsdämpfendes Bearbeitungssystem, **dadurch gekennzeichnet, dass** es umfasst:
▪ einen Bearbeitungskopf (50) gemäß einem der Ansprüche 9 bis 11, der einen Einlass zum Einleiten einer Schmierflüssigkeit in den Teil einer zu bohrenden Welle umfasst;
▪ eine schwingungsdämpfende Vorrichtung gemäß einem der Ansprüche 1 bis 8, die für den Durchgang der Führungsstange (40) bei der Bearbeitung einer Welle (30) ausgelegt ist.

## Claims

1. An anti-vibration device for machining a hollow shaft (30), **characterised in that** it comprises a first element (10) intended to be maintained at least partially within shaft (30) in a fixed position in relation to it and permitting the guiding of a guide bar (40) moving axially within the shaft (30), the first element comprising:
▪ at least one first mechanical vibration damping means (121) at the external periphery of the first element (10) in relation to the internal surface of the shaft (30) and in contact with it;
▪ at least one second mechanical vibration damping means (110, 110') arranged internally at the periphery of the first element (10) in relation to the external surface of guide bar (40) and in contact with it,
▪ where the first element (10) comprises, in addition, a hydraulic damping means (18) via the intermediary of a lubricating fluid (122) flowing through the first element (10) and,
the said anti-vibration device comprising:
▪ at least one first external groove (12) and at least one first external seal (121) adapted to cooperate with the said first external groove (12) and forming the first means of damping (121);
▪ at least a first internal circumferential groove (11) and at least one first internal seal (110) adapted to cooperate with the said first internal groove (11) and forming the second means of damping (110, 110');
▪ **characterised in that** the first element is a first collar held fixed axially in relation to shaft (30) by means of a shoulder (17) and **in that** anti-vibration device comprises:
▪ an internal circumferential cavity (18) able to circulate a fluid (122) arriving via a first duct (14, 16) and exiting via a second duct (13, 15), the first (14, 16) and second ducts (13, 15) passing through the radial thickness of the anti-vibration device, the internal circumferential cavity (18) forming the hydraulic means (18) when a pressurized lubricating fluid flows through the first element.

2. An anti-vibration device for machining a shaft (30) according to claim 1, **characterised in that** the first and second internal circumferential grooves are each located close to the extremities of the first collar (10).

3. An anti-vibration device for machining a shaft (30) according to either or both claims 1 and 2, and **characterised in that** the internal circumferential cavity (18) extends longitudinally between:
▪ a first extremity (180) in proximity to the first internal circumferential groove (11);
▪ a second extremity (180') in proximity to the second internal circumferential groove (11 ').

4. An anti-vibration device for machining a shaft (30) according to claims 1 to 4, and **characterised in that** the first duct (14, 16) comprises:
▪ a first elbowed opening (16, 14) permitting the passage of a fluid (122) from the exterior of the anti-vibration device towards the interior circumferential cavity (18), the said elbowed opening comprising a longitudinal opening (16) the length of the exterior surface of the first collar (10) and a radial extension (14) leading into the internal circumferential cavity (18) in proximity to the first extremity of the said cavity (18).

5. An anti-vibration device for machining a shaft (30) according to any of claims 1 to 4, **characterised in that** the second duct (13, 15) comprises:
▪ a second elbowed opening (13, 15) permitting the passage of a fluid (122) from the internal circumferential cavity (18) to the exterior of the anti-vibration device, the said second elbowed opening (13, 15) comprising a radial opening (13) in proximity to the second extremity of the said cavity (18) and a longitudinal prolongation (15) passing through the shoulder (17) so as to lead to the exterior of the said anti-vibration device.

6. An anti-vibration device for the machining of a shaft (30) according to any of claims 1 to 5, **characterised in that** it comprises a second element (20) intended to be maintained at least partially to the exterior of a machining head (50) and in a fixed position in relation to it, the second element comprising:
▪ at least a third means of mechanical damping (22) arranged at the external periphery of the second element (20) in relation to the internal surface of the shaft and making contact with it.

7. An anti-vibration device for machining a shaft (30) according to claim 6, **characterised in that** the second element (20) comprises an external groove (23) and a second external seal (22) adapted to cooperate with the said second exterior groove (23) and forming a third mechanical damping means.

8. An anti-vibration device for machining a shaft (30) according to any of claims 1 to 7, **characterised in that** the bodies (10C, 20A) of the first and/or second element (10, 20) are made from polyamide.

9. A machining head (50) intended for boring a shaft (30) comprising an ensemble of shoes (51), the said machining head (50) being guided by a guide bar (40) fixed to machining head (50) by an attachment means (60), **characterised in that** a moveable collar (20) is mounted integral with the said machining head (50), the said moveable collar (20) comprising an external groove (23) and an external seal (22) adapted to cooperate with the said second external groove (23) to form at least one contact with the internal surface of the shaft (30) and permitting absorption of part of the mechanical vibration generated while machining a shaft.

10. A machining head (50) according to claim 9, **characterised in that** the means of attachment (60) is a locking ring (60).

11. A machining head (50) according to claim 10, **characterised in that** the moveable collar (50) is held fixed longitudinally at the periphery of the said machining head (50) between an edge of the extremity of the said machining head (50) and the locking ring (60).

12. An anti-vibration machining system, **characterised in that** it comprises:
▪ a machining head (50) according to any of claims 9 to 11, comprising an inlet permitting the introduction of a lubricating fluid into the part of a shaft to be bored;
▪ an anti-vibration device according to any of the claims 1 to 8 adapted for the passage of guide bar (40) during the machining of a shaft (30).
